Europäisches Patentamt

European Patent Office

Office européen des brevets

(19)

(11) Publication number: **0 205 409**
**B1**

# (12) EUROPEAN PATENT SPECIFICATION

(45) Date of publication of the patent specification:
25.01.89

(51) Int. Cl.⁴: **B60N 1/02**

(21) Application number: **86830088.0**

(22) Date of filing: **16.04.86**

(54) Adjustable seat for motor vehicles.

(30) Priority: **15.05.85  IT 6744485**

(43) Date of publication of application:
**17.12.86 Bulletin 86/51**

(45) Publication of the grant of the patent:
**25.01.89 Bulletin 89/4**

(84) Designated Contracting States:
**DE FR GB SE**

(56) References cited:
**FR-A- 1 061 595**
**US-A- 1 860 612**
**US-A- 2 082 297**
**US-A- 3 356 413**
**US-A- 3 368 840**
**US-A- 3 711 149**
**US-A- 3 879 007**

(73) Proprietor: **FIAT AUTO S.p.A., Corso Giovanni Agnelli 200, I-10135 Torino(IT)**

(72) Inventor: **Dal Monte, Antonio, Via Flaminia 395, I-00196 Roma(IT)**

(74) Representative: **Bosotti, Luciano et al, c/o Jacobacci-Casetta & Perani S.p.A. Via Alfieri, 17, I-10121 Torino(IT)**

EP 0 205 409 B1

ACTORUM AG

**Description**

The present invention relates to seats for motor vehicles and is particularly concerned with a motor vehicle seat comprising a cushion, a back, and support means for the seat which allow an adjusting movement to be imparted to the seat in a longitudinal direction relative to the structure of the motor vehicle.

Seats of the above-specified type are currently in use in the motor-car industry. The longitudinal adjusting movement allows the position of the seat to be adapted to the different anthropometric characteristics, preferences or habits of the driver or passengers of the motor vehicle.

In general, drivers or passengers of tall stature tend to move the seat backwards, away from the steering wheel and pedals or the dashboard, while drivers and passengers of small stature tend to move the seat forwards. Although known types of adjustable seats normally provide for the possibility of varying the orientation of the back relative to the cushion, the cushion and the back maintain a fixed relative position during the longitudinal adjusting movement.

This means that the overall length of the cushion (that is, the distance between the front edge of the cushion and the back) remains fixed, regardless of the position adopted by the seat. A predetermined value is therefore chosen for this length, selected in relation to the mean thigh length of the "motoring population". Since the range of variation of this length is rather wide (10 cm or more according to statistical records) in drivers and passengers whose anthropometric data are at the extremes of this range, conditions of discomfort can arise.

More particularly, with drivers or passengers of tall stature, a situation can arise in which the thighs are not supported for a sufficient length. For drivers or passengers of small stature, however, the phenomenon known as "raised limb" can arise due to the fact that the distal portion of the thigh is supported too much and is lifted up by the front edge of the cushion, so that an undesirable pressure is created in the popliteal space (that is, in the region behind the knee) not only during operation of the pedals but also in the rest position.

More specifically the object of the present invention is to provide an adjustable seat of the type set forth in the pre-characterising portion of Claim 1; which is known, for instance, from US-A 3 711 149, which allows the aforesaid disadvantages to be remedied.

According to the present invention, this object is achieved by a seat of the type specified above, having the further characteristics set forth in Claim 1.

Due to these characteristics, an adjustable seat is achieved in which the overall length of the cushion varies in relation to the position of the seat, increasing when the car seat is moved backwards (drivers and passengers of tall stature) and decreasing when the seat is moved forwards (drivers and passengers of small stature).

According to one presently preferred embodiment, the support means for the back are shaped so as to keep the back in a constant orientation relative to structure of the motor vehicle during the adjusting movement of the back, while the support means for the cushion impart a tilting movement to the cushion during its translation in the forward direction relative to the structure of the motor vehicle, which causes the raising of the rear edge of the cushion.

In other words, the longitudinal sliding of the cushion and the movement of the back take place in different planes. In this way, that portion of the seat which supports the lumbosacral region of the spinal column of the driver or passenger modifies its overall configuration during the adjustment movement and acts such that the point of maximum lordosis, that is, of maximum forward curvature of the spinal column, is anatomically correct both for subjects of tall stature and for subjects of small stature.

The invention will now be described, purely by way of non-limiting example, with reference to the appended three figures of drawings indicated by the references 1 to 3.

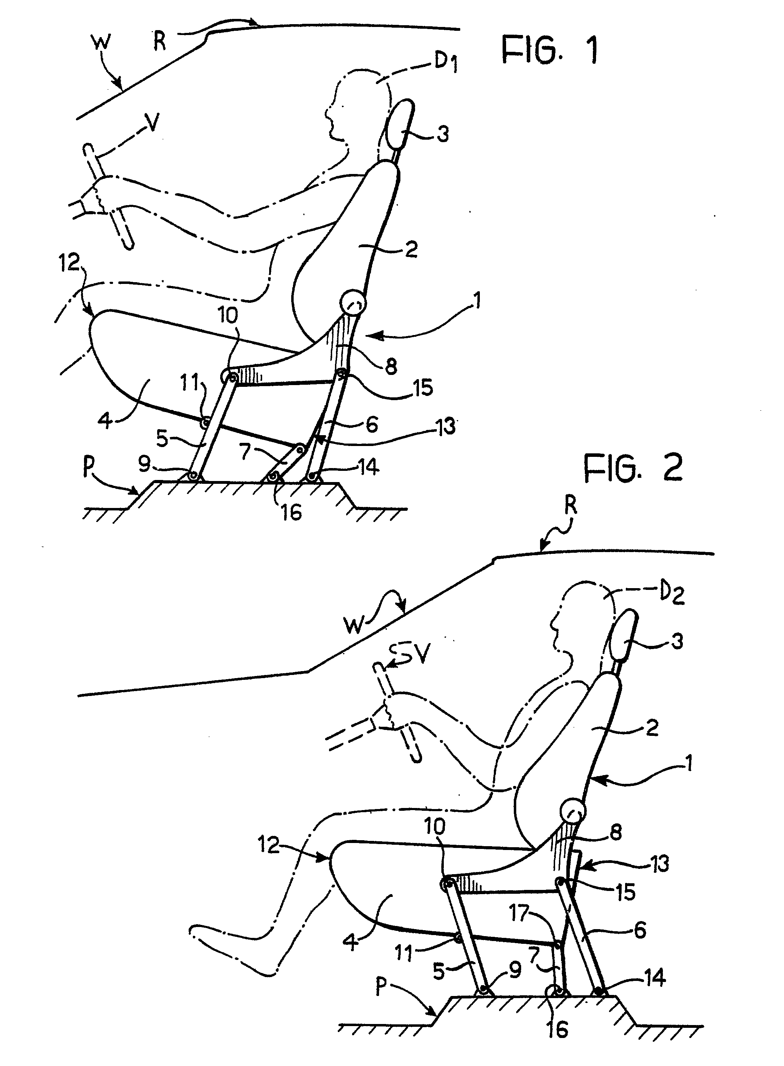

Figures 1 and 2 illustrate diagrammatically, in side elevation, an adjustable seat according to the invention in two possible positions of use.

In particular, Figure 1 relates to the use of the seat according to the invention by a driver or a passenger of tall stature, while Figure 2 relates to the use of the seat by a driver or passenger of small stature.

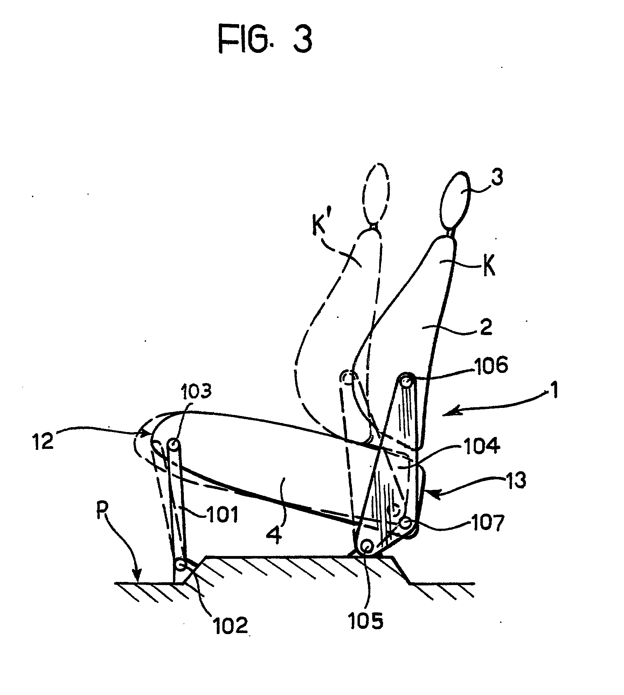

Figure 3 illustrates diagrammatically one possible variant of the invention.

In the drawings, an adjustable seat for motor vehicles is indicated 1. The drawings relate particularly to a seat intended to be occupied by the driver of a motor car.

The floor P of the passenger compartment, the front portion R of the roof, the windscreen W and steering wheel V of this car, which is not illustrated in its entirety, are shown diagrammatically.

The profile of the driver occupying the seat is illustrated diagrammatically by chain lines in Figures 1 and 2.

As already mentioned above, Figure 1 relates to the use of the seat by a driver or passenger of tall stature $D_1$, while Figure 2 relates to the use of the seat 1 by a driver of small stature $D_2$.

Recognizable in the seat 1 are a back 2 provided with a head rest 3 at its upper end, and a largely horizontal element 4, which defines the sitting plane of the seat and is referred to as the "cushion" in this description and in the claims that follow.

The seat 1 according to the invention is an adjustable seat, that is, a seat to which a translational movement in the longitudinal direction relative to the structure of the motor vehicle can be imparted to adapt the position of the seat 1 to the anthropometric characteristics of the driver or passenger occupying it.

The seat 1 is mounted on the floor P of the passenger compartment of the motor vehicle by an adjustable support and guide device comprising, on at least one side of the seat 1, three pivotable arms, indicated 5, 6 and 7, and a horizontally-extending arm 8 connected to the side of the back 2 so that it is in fact fixed to the back 2.

It must be stated, however, that this representation is diagrammatic and is limited to the illustration only of parts essential to the understanding of the invention. The engagement or fixing elements which allow the seat 1 to be locked in a fixed position of the translational movement, selectively identified according to the anthropometric characteristics, preferences and habits of the driver or passenger, and possible orienting devices which permit the selective variation of the inclination of the back 2 relative to the cushion 4 are not shown here since they are not relevant to the understanding of the invention. The arms 5, 6 and 7 are intended to make the back 2 and the cushion 4 follow different translation paths in the longitudinal adjusting movement of the seat 1.

As indicated above, according to a preferred embodiment, two identical support and guide devices, comprising the pivotable arms 5, 6, 7 and the horizontal arm 8, are placed on both sides of the seat 1. Since these devices are wholly identical to each other, the structure and operating criteria of only one of them will be described in detail below.

In the first pivotable arm 5 there can be distinguished essentially:
— an end 9 hinged to the floor P of the passenger compartment, which defines the horizontal axis about which the arm 5 pivots,
— a free end 10 at which the pivotable arm 5 is hinged to the free end of the horizontal arm 8 which extends forwardly from the back 2, and
— an intermediate region 11 (preferably central, that is, located halfway between the ends 9 and 10) at which the first arm 5 is hinged to the cushion 4 of the seat in a position intermediate the front edge 12 and the rear edge 13 of the cushion 4.

On the other hand, in the second pivotable arm 6, whose overall length is substantially equal to that of the arm 5, there can be distinguished:
— an end 14 hinged to the floor P of the passenger compartment, and
— a free end 15 at which the arm 6 is hinged to the horizontal arm 8 in that region of the arm 8 connected to the back 2.

The free ends 10 and 15 of the arms 5 and 6 are hinged to the horizontal arm 8 at a distance practically identical to the distance separating the ends 9 and 14 at which the arms 5 and 6 are hinged to the floor P.

The dimensions and configuration of assembly of the arms 5, 6 and 8 are therefore such that the back 2 maintains a fixed orientation relative to the structure of the vehicle during the longitudinal translational movement imparted to the back to enable its adaptation to the anthropometric characteristics of a driver or passenger.

To be precise, it should be observed that the longitudinal translational movement of the back 2 relative to the structure of the motor vehicle does not occur along a straight path but along an approximately circular or arcuate path the extent of which is determined by the length (identical) of the arms 5 and 6.

In the third arm 7, however, there can be distinguished a hinge end 16 fixed to the floor P in a position intermediate the ends 9 and 14 of the arms 5 and 6, and an end 17 hinged to the cushion 4 in correspondence with the rear edge 13 of the cushion 4.

The overall length of the third pivotable arm 7, that is, the distance which separates the hinge end 16 from the free end 17, is slightly less than the distance which, in the first pivotable arm 5, separates the hinge end 9 from the central region 11 of hinging to the cushion 4. This latter distance, as seen, is equal to about half the overall length of the first arm 5.

The cushion 4 is therefore supported by support means at least partially separate from those which support the back 2. Consequently, during the translational movement of the seat 1, the cushion 4 follows a path which is different from that followed by the back 2.

The path of the cushion 4 is also a roughly horizontal path consisting more precisely of an approximately circular or arcuate path the extent of which is defined substantially by the distance which, in the first pivotable arm 5, separates the hinge end 9 from the central region 11 of hinging to the cushion 4. Consequently, when the back 2 is moved longitudinally relative to the structure of the passenger compartment causing pivoting of the arms 5 and 6, the cushion 4 also effects a similar movement. In other words, the cushion 4 moves forward when the back 2 is moved forward, and moves back when the back 2 is moved back towards the rear end of the motor vehicle.

Naturally, the relationship of the kinematic effect can be reversed: in fact, it can be the back 2 which moves due to a movement of the cushion 4.

In each case, the extent of movement of the cushion 4 is linked to the extent of the movement of the back 2 and, more precisely, is a fraction thereof equal to about half. The cushion 4 is in fact connected to the arm 5 in a region 11 located, with respect to the hinge point 9 of the arm 5, at a distance equal to about half the distance between the hinge point and the free end 10 to which the arm 8 fixed to the back is connected. Consequently, for a given angular extent of pivoting of the arm 5, the travel of the cushion 4 will be equal to about half the travel of the back 2.

In other words, when the back 2 is moved forwardly towards the steering wheel V by a predetermined distance, the cushion 4 also moves forwardly towards the steering wheel V by a distance equal to about half the distance of movement of the back 2.

On the contrary, when the back 2 is moved backwards, the cushion 4 goes back by a distance equal to about half the distance covered by the back 2.

Adjustment of the position of the seat 7 therefore involves a corresponding variation in the length of the sitting plane defined by the cushion 4, that is, of the distance between the front end 12 and the rear end 13 of the cushion.

Thus, there is an exact adaptation of the length of the sitting plane to the diverse anthropometric characteristics of the driver or passenger occupying the seat.

More particularly, drivers or passengers of tall stature $D_1$, who adjust the seat 1 by moving the back 2 away from the steering wheel V, pedals or dashboard, have a longer sitting plane available than that used by drivers or passengers of small stature $D_2$ who adjust the seat 1 by moving the back 2 towards the steering wheel, pedals or dashboard.

One thus avoids the thighs of drivers or passengers of tall stature being supported over an insufficient length and the occurrence of the phenomenon defined as "raised limb" in drivers or passengers of small stature.

At the same time, the length of the third pivotable arm 7, located intermediate the arms 5 and 6, is chosen in such a manner that in its longitudinal translational movement relative to the structure of motor vehicle, the cushion 4 will also be subjected to a rotational or tilting movement so that, when the cushion 4 moves forwards towards the front of the motor vehicle, the front edge 12 is lowered and the rear edge 13 is raised towards the back 2.

The occurrence of this tilting of the cushion 6 means that the seat 1 of the invention adapts itself in the optimum manner to the lumbosacral region of the spinal column of the driver or passenger occupying the seat. In particular, the point of maximum lordosis, that is, the point of maximum forward curvature of the spinal column, is maintained in the correct position both for subjects of tall stature and subjects of small stature.

For subjects of tall stature (Figure 1) who use the seat 1 in a position away from the steering wheel, pedals or dashboard, the area of the back intended to support the lumbosacral region of the spinal column of the person in the seat is in fact located at a greater distance from the upper surface of the cushion 4 than that which separates the said area of the back from the upper surface of the seat 4 when the seat 1 is moved forwardly (Figure 2) for use by a person of small stature.

Naturally, that explained above is only one of the mechanisms which permit the realization of the present invention. For another example of a mechanism of this type, reference can be made to the variant illustrated diagrammatically in Figure 3.

In this case (normally in correspondence with both sides of the seat 1) the cushion 4 is supported adjacent its front edge 12 by a first pivotable arm 101. The arm 101 is hinged to the floor P at its lower end 102 and is connected to the cushion 4 at its upper end 103.

Adjacent the rear edge 13 of the cushion 4 on each side of the seat 1 is mounted a shaped arm constituted, in the example illustrated, by a plate 104 in the form of a scalene triangle having the two vertices adjacent its major side connected to the floor P and the back 2 at two hinge points indicated 105 and 106 respectively. The plate 104 is also connected to the cushion 4 at a hinge point 107 located adjacent its other vertex which, with respect to the major side of the plate 104, is on the side opposite the front edge 12 of the cushion 4.

Therefore, in this case also, the cushion 4 and the back 2 are connected to a single pivoting arm (the plate 104) hinged to the floor P of the passenger compartment. The distance separating the cushion 4 from the point 105 of hinging of the pivoting arm 104 to the floor, however, is less than the distance between the hinge point 105 and the back 2. Consequently, when the arm 104 is pivoted in order to adjust the position of the seat 1 (for example, from the moved back position K illustrated by a continuous line towards the forward position K' illustrated by a broken line and vice versa), for a given angular travel of the arm 104, the cushion 4 describes a path whose extent is a fraction of the extent of the path travelled by the back 2.

Moreover, the fact that the rear edge 13 of the cushion 4 is hinged to the plate 104 at the vertex 107 opposite the major side (the vertex facing the rear of the seat 1) means that rear edge 13 of the cushion 4, is raised in the forward translational movement but is lowered during translation in the opposite direction. It is thus possible to effect, through a tilting movement of the cushion 4 which is superimposed on the translational movement of the cushion 4, the optimum adaptation to the lumbosacral region of the spinal column of the person occupying the seat 1 described above with reference to the embodiment of Figures 1 and 2.

The extent of the tilting movement of the cushion 4 can be determined, relative to the distance between the hinge points 105 and 107 of the plate 104, by acting upon the length of the pivotable arm 103 which supports the cushion 4 adjacent its front edge 12.

## Claims

1. Motor vehicle seat comprising a cushion (4), a back (2), and support means for the seat (1) which allow an adjusting movement to be imparted to the seat in a longitudinal direction relative to the structure (P) of the motor vehicle, wherein at least partially separate support means (5, 6, 7; 101, 104) are provided for the cushion (4) and the back (2), characterised in that different longitudinal adjusting movements can be imparted to the cushion (4) and the back (2) along respective translation paths, and the support means for the cushion (5, 7; 101, 104) and the back (5, 6; 104) are kinematically dependent in such a way that the path of the movement of the cushion (4) is a fraction of the path of the movement of the back (2).

2. Seat according to Claim 1, characterised in that the extent of the movement of the cushion (4) is about half the path of the movement of the back (2).

3. Seat according to Claim 1 or Claim 2, characterised in that the support means comprise at least one pivotable arm (5, 104) having one end (9, 105) hinged to the structure (P) of the motor vehicle, another end (10; 106) hinged to the back (2), and an intermediate region hinged (11, 107) to the cushion (4).

4. Seat according to Claim 3, characterised in that said pivotable arm (5) is hinged to the cushion (4) about in the middle of said intermediate region halfway between the hinge end (9) and the free end (10) of the at least one pivotable arm (5).

5. Seat according to any one of Claims 1 to 4, characterised in that, during adjusting movement of the seat in the forward direction relative to the structure (P) of the motor vehicle, the relative length of the support means (5, 7; 101, 104) of the cushion (4) is such that they impart a tilting movement to the cushion (4), which raises the rear edge (13) thereof.

6. Seat according to any one of Claims 1 to 5, characterised in that the support means (5, 6, 8) for the back (2) have a configuration such as to maintain the back (2) in a constant orientation relative to the structure (P) of the motor vehicle during the adjusting longitudinal movement of the back (2) and of the cushion (4).

7. Seat according to Claim 5 and Claim 6, characterised in that the support means comprise, on at least one side of the seat (1):
   – first (5) and second (6) pivotable arms of substantially the same length, having respective ends (9, 14) hinged to the structure (P) of the motor vehicle and respective ends (10, 15) hinged to the back (8, 2) and both pivotable arms being separated from each other by the same distance, the intermediate region of the first arm (5) being hinged (11) to the cushion (4) in a position situated between the front end edge (12) and rear end edge (13) of the cushion (4), and
   – a third pivotable arm (7) having an end (16) hinged to the structure (P) of the vehicle and another end (17) hinged to the cushion (4) adjacent the rear edge (13) thereof, said third arm (7) being situated between said first and second arms (5, 6) and having a length less than the length of that portion of the first arm (5) hinged between the structure (P) and the cushion (4).

8. Seat according to Claim 3 and Claim 5, characterised in that at least one pivotable arm (104) is shaped so that ends (105, 106, 107) hinged respectively to the structure (P), the back (2) and the cushion (4) are situated at the vertices of a triangle, said end (107) hinged to the cushion being located near the rear side thereof.

**Patentansprüche**

1. Kraftfahrzeugsitz mit einem Sitzteil (4), mit einem Rückenteil (2) sowie mit Halterungsmitteln für den Sitz, die eine Einstellbewegung des Sitzes in Längsrichtung relativ zu dem Kraftfahrzeugaufbau (P) ermöglichen, wobei wenigstens teilweise separate Halterungsmittel (5, 6, 7; 101, 104) für das Sitzteil (4) und das Rückenteil (2) vorgesehen sind, dadurch gekennzeichnet, daß das Sitzteil (4) und das Rückenteil (2) unterschiedliche longitudinale Einstellbewegungen längs jeweils eigener Verschiebungsbahnen ausführen können, und daß die Halterungsmittel (5, 7; 101, 104) für das Sitzteil und die Halterungsmittel (5, 6; 104) für das Rückenteil kinematisch derart voneinander abhängig sind, daß die Bewegungsbahn des Sitzteils (4) einem Bruchteil der Bewegungsbahn des Rückenteils (2) entspricht.

2. Sitz nach Anspruch 1, dadurch gekennzeichnet, daß die Bewegungsbahn des Sitzteils (4) etwa halb so groß ist wie die des Rückenteils (2).

3. Sitz nach Anspruch 1 oder 2, dadurch gekennzeichnet, daß die Halterungsmittel wenigstens einen Schwenkarm (5, 104) umfassen, der mit einem Ende (9; 105) an dem Kraftfahrzeugaufbau (P), mit dem anderen Ende (10; 106) an dem Rückenteil (2) und mit einem Zwischenabschnitt (11, 107) an dem Sitzteil (4) angelenkt ist.

4. Sitz nach Anspruch 3, dadurch gekennzeichnet, daß der Schwenkarm (5) etwa in der Mitte des Zwischenabschnitts auf halbem Weg zwischen dem angelenkten Ende (9) und dem freien Ende (10) wenigstens eines Schwenkarms (5) an dem Sitzteil (4) angelenkt ist.

5. Sitz nach einem der Ansprüche 1 bis 4, dadurch gekennzeichnet, daß die relative Länge der Halterungsmittel (5, 7; 101, 104) des Sitzteils (4) so bemessen ist, daß sie dem Sitzteil (4) während der Einstellbewegung des Sitzes in Vorwärtsrichtung relativ dem Kraftfahrzeugaufbau (P) eine Kippbewegung erteilen, durch die die hintere Kante (13) des Sitzteils (4) angehoben wird.

6. Sitz nach einem der Ansprüche 1 bis 5, dadurch gekennzeichnet, daß die Halterungsmittel (5, 6, 8) für das Rückenteil (2) so geformt sind, daß sie das Rückenteil (2) während der in Längsrichtung erfolgenden Einstellbewegung des Rückenteils (2) und des Sitzteils (4) in konstanter Ausrichtung relativ zu dem Kraftfahrzeugaufbau (P) halten.

7. Sitz nach Anspruch 5 und 6, dadurch gekennzeichnet, daß die Halterungsmittel auf wenigstens einer Seite des Sitzes (1) folgende Teile umfassen:
   – einen ersten (5) und einen zweiten Schwenkarm (6) von im wesentlichen gleicher Länge, die jeweils mit einem Ende (9, 14) an dem Kraftfahrzeugaufbau (P) und mit dem jeweils anderen Ende (10, 15) an dem Rückenteil (8, 2) angelenkt sind und die durch den gleichen Abstand voneinander getrennt sind, wobei der Zwischenabschnitt des ersten Schwenkarms (5) in einer zwischen der vorderen Kante (12) und der hinteren Kante des Sitzteils (4) liegenden Stelle (in 11) an dem Sitzteil (4) angelenkt sind,
   – sowie einen dritten Schwenkarm (7), der mit einem Ende (16) an dem Kraftfahrzeugaufbau (P) und mit dem anderen Ende (17) in der Nähe der hinteren Kante (13) des Sitzteils (4) an diesem angelenkt ist, wobei der dritte Schwenkarm (7) zwischen dem ersten und dem zweiten Schwenkarm (5, 6) liegt und eine Länge hat, die kleiner ist als die Länge desjenigen Abschnitts des ersten Schwenkarms (5), der zwischen dem Kraftfahrzeugaufbau (P) und dem Sitzteil (4) angelenkt ist.

8. Sitz nach Anspruch 3 und 5, dadurch gekennzeichnet, daß wenigstens ein Schwenkarm (104) so geformt ist, daß die an dem Kraftfahrzeugaufbau (P) bzw. dem Rückenteil (2) bzw. dem Sitzteil (4) angelenkten Enden (105, 106, 107) auf den Eckpunkten eines Dreiecks liegen, wobei das an dem Sitzteil angelenkte Ende (107) sich in der Nähe der Rückseite des Sitzteils befindet.

## Revendications

1. Siège de véhicule automobile comprenant un coussin (4), un dossier (2) et un moyen de support du siège (1) qui permet d'imprimer au siège un déplacement de réglage longitudinalement par rapport à la structure (P) du véhicule automobile, dans lequel des moyens de support indépendants en partie au moins (5, 6, 7; 101, 104) sont prévus pour le coussin (4) et pour le dossier (2), caractérisé en ce qu'on peut imprimer au coussin (4) et au dossier (2) des déplacements de réglage longitudinaux différents suivant des trajectoires de translation respectives, et les moyens de support du coussin (5, 7; 101, 104) et du dossier (5, 6; 104) sont cinématiquement dépendants de telle sorte que la trajectoire de déplacement du coussin (4) est une fraction de la trajectoire de déplacement du dossier (2).

2. Siège selon la revendication 1, caractérisé en ce que l'étendue de déplacement du coussin (4) est égale à la moitié environ de la trajectoire de déplacement du dossier (2).

3. Siège selon la revendication 1 ou la revendication 2, caractérisé en ce que les moyens de support comprennent au moins un bras pivotant (5, 104) présentant une extrémité (9, 105) articulée sur la structure (P) du véhicule automobile, une autre extrémité (10; 106) articulée sur le dossier (2) et une région intermédiaire articulée (11, 107) sur le coussin (4).

4. Siège selon la revendication 3, caractérisé en ce que ledit bras pivotant (5) est articulé sur le coussin (4) environ au milieu de ladite région intermédiaire à mi-chemin entre l'extrémité articulée (9) et l'extrémité libre (10) du ou de chaque bras pivotant (5).

5. Siège selon l'une quelconque des revendications 1 à 4, caractérisé en ce que, pendant le déplacement de réglage du siège vers l'avant par rapport à la structure (P) du véhicule automobile, la longueur relative des moyens de support (5, 7; 101, 104) du coussin (4) est telle qu'ils impriment au coussin (4) un mouvement basculant qui en élève le bord arrière (13).

6. Siège selon l'une quelconque des revendications 1 à 5, caractérisé en ce que les moyens de support (5, 6, 8) du dossier (2) sont configurés de façon à maintenir le dossier (2) dans une orientation constante par rapport à la structure (P) du véhicule automobile pendant le déplacement longitudinal de réglage du dossier (2) et du coussin (4).

7. Siège selon la revendication 5 et la revendication 6, caractérisé en ce que les moyens de support comprennent, d'un côté au moins du siège (1):

– un premier (5) et un second (6) bras pivotants ayant sensiblement la même longueur, présentant des extrémités respectives (9, 14) articulées sur la structure (P) du véhicule automobile et des extrémités respectives (10, 15) articulées sur le dossier (8, 2) et les deux bras pivotants étant séparés l'un de l'autre par la même distance, la région intermédiaire du premier bras (5) étant articulée (11) sur le coussin (4) en un emplacement situé entre le bord d'extrémité avant (12) et le bord d'extrémité arrière (13) du coussin (4), et

– un troisième bras pivotant (7) présentant une extrémité (16) articulée sur la structure (P) du véhicule et une autre extrémité (17) articulée sur le coussin (4) près du bord arrière (13) de celui-ci, le troisième bras (7) étant situé entre lesdits premier et second bras (5, 6) et ayant une longueur inférieure à la longueur du tronçon du premier bras (5) articulé entre la structure (P) et le coussin (4).

8. Siège selon la revendication 3 et la revendication 5, caractérisé en ce que chaque bras pivotant (104) est conformé en sorte que des extrémités (105, 106, 107) articulées respectivement sur la structure (P), sur le dossier (2) et sur le coussin (4) soient situées aux sommets d'un triangle, ladite extrémité (107) articulée sur le coussin étant située près du côté arrière de celui-ci.

FIG. 1

FIG. 2

# FIG. 3